(19) Europäisches Patentamt / European Patent Office / Office européen des brevets

(11) **EP 4 067 315 B1**

(12) **EUROPÄISCHE PATENTSCHRIFT**

(45) Veröffentlichungstag und Bekanntmachung des Hinweises auf die Patenterteilung:
**12.03.2025   Patentblatt 2025/11**

(21) Anmeldenummer: **21165574.1**

(22) Anmeldetag: **29.03.2021**

(51) Internationale Patentklassifikation (IPC):
**C03B 23/07** *(2006.01)*

(52) Gemeinsame Patentklassifikation (CPC):
**C03B 23/07**

(54) **ROHR AUS QUARZGLAS UND VERFAHREN ZUR HERSTELLUNG DESSELBEN**

QUARTZ GLASS TUBE AND METHOD OF MANUFACTURING THE SAME

TUBE EN VERRE QUARTZ ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.10.2022   Patentblatt 2022/40**

(73) Patentinhaber: **Heraeus Quarzglas GmbH & Co. KG**
**63450 Hanau (DE)**

(72) Erfinder:
• **SÖHN, Matthias**
**63450 Hanau (DE)**
• **GROMANN, Boris**
**63450 Hanau (DE)**
• **VISNOW, Eduard**
**63450 Hanau (DE)**

(74) Vertreter: **Gille Hrabal Partnerschaftsgesellschaft mbB**
**Patentanwälte**
**Brucknerstraße 20**
**40593 Düsseldorf (DE)**

(56) Entgegenhaltungen:
JP-A- 2007 001 811    JP-A- 2010 111 557
US-A1- 2017 327 403

**Beschreibung**

Technisches Gebiet

Die vorliegende Erfindung betrifft ein Verfahren zur Herstellung eines Rohres aus Quarzglas. Insbesondere betrifft die Erfindung ein Verfahren zur Herstellung eines Rohres aus Quarzglas durch Umformen eines Hohlzylinders, der eine Hohlzylinderbohrung, einen Außendurchmesser $C_a$, einen Innendurchmesser $C_i$ und eine Wandstärke aufweist, die mindestens 20 mm beträgt, indem dieser um eine Rotationsachse rotierend kontinuierlich mit einer relativen Vorschubgeschwindigkeit $V_C$ einer Heizzone zugeführt, darin bereichsweise erweicht, und der erweichte Bereich unter der Wirkung eines in der Hohlzylinderbohrung anliegenden Gasdrucks radial gedehnt und aus dem erweichten Bereich kontinuierlich ein Rohrstrang mit einem Rohr-Außendurchmesser $T_a$, einem Rohr-Innendurchmesser $T_i$ und einer Rohr-Wanddicke geformt und mit einer Abzugsgeschwindigkeit $V_T$ abgezogen wird.

Außerdem betrifft die Erfindung ein Rohr aus Quarzglas mit einem Rohr-Außendurchmesser $T_a$, einem Rohr-Innendurchmesser $T_i$, einer Rohr-Wanddicke, einer Außenmantelfläche und einer Innenmantelfläche.

Stand der Technik

Mittels derartiger Verfahren und Vorrichtungen werden Hohlzylinder aus Glas; insbesondere aus Quarzglas, in einem oder in mehreren Heiß-Umformschritten zu Rohren umgeformt, wobei die radialen Rohr-Abmessungen gegenüber den radialen Abmessungen des Hohlzylinders verändert werden. Dabei wird ein um seine Längsachse rotierender Ausgangs-Hohlzylinder zonenweise erweicht und dabei unter Einwirkung einer radial nach außen gerichteten Kraft entweder gegen ein Formwerkzeug gedehnt, das in vorgegebenem radialem Abstand zur Rohrlängsachse angeordnet ist, oder er wird werkzeugfrei umgeformt. Die radial nach außen gerichtete Kraft basiert auf der Zentrifugalkraft und/oder auf einem Innen-Überdruck in der Hohlzylinder-Innenbohrung (auch als "Gasdruck" bezeichnet).

Die Begriffe "Innenbohrung" oder "Bohrung" in Verbindung mit einem Rohr oder Hohlzylinder besagen nicht, dass die Innenbohrung oder Bohrung durch einen Bohrvorgang erzeugt worden ist.

Hinsichtlich der Beheizung des Ausgangs-Hohlzylinders kann zwischen einer flammenbasierten Heizzone und einem elektrisch beheizten Ofen unterschieden werden. Quarzglas ist ein guter thermischer Isolator, so dass flammenbasierte Heizzonen, bei denen die Erwärmung der Oberfläche vorwiegend auf Rekombinationsreaktionen mit geringer Eindringtiefe der Heizwirkung beruht, auf das Umformen von Ausgangs-Hohlzylindern mit geringen Wandstärken limitiert sind, beispielsweise von Wandstärken von weniger als 10 mm. Demgegenüber ermöglichen elektrisch beheizte Öfen einen höheren und auch über eine größere Strecke homogenen Wärmeeintrag, da die Infrarotstrahlung tief ins Glas eindringen kann.

Grundsätzlich werden eine hohe Maßhaltigkeit und Oberflächenqualität des abgezogenen Rohrstrangs angestrebt. Für eine hohe Oberflächenqualität spricht das werkzeugfreie Umformen.

Das Einhalten der Maßhaltigkeit ist hingegen in der Regel durch Einsatz eines Formwerkzeugs einfacher erreichbar. In jedem Fall ist die laufende Erfassung und kontinuierliche Regelung einer radialen Abmessung des Rohrstrangs, wie dem Außendurchmesser, dem Innendurchmessers oder der Wanddicke unumgänglich. Als Stellgröße einer solchen Regelung sind der Gasdruck, die relative Vorschubgeschwindigkeit zwischen Hohlzylinders und Heizzone und die Temperatur in der Heizzone gebräuchlich.

Ein Verfahren zur Herstellung von Quarzglasrohren der eingangs genannten Gattung ist aus der JP 2010-111557 A bekannt. Dabei wird ein dickwandiger Quarzglas-Hohlzylinder mit einem Außendurchmesser von 200 mm mit horizontal orientierter Längsachse kontinuierlich und unter Rotation mit einer Vorschubgeschwindigkeit von 4 cm/min einem Heizofen zugeführt und darin zonenweise auf eine Temperatur um 2100°C erweicht. Innerhalb des Heizofens sind in einem einstellbaren radialen Abstand zur Rohr-Längsachse wassergekühlte Grafitplatten angeordnet, die als Formwerkzeug dienen. Infolge von Überdruck innerhalb des Hohlzylinders wird das erweichte Quarzglas gegen die Graphitplatten geblasen und dabei zu einem Rohrstrang umgeformt, der mit einer Abzugsgeschwindigkeit von 12 cm/min aus dem Heizofen abgezogen wird. Dabei löst sich der Rohrstrang von den Graphitplatten, wodurch es noch zu Durchmesseränderungen kommen kann, die von den Prozessbedingungen abhängen. Um eine davon unabhängige Regelung des Rohrstrang-Außendurchmessers auf einen Sollwert von 340 mm zu erreichen, sind zwei Kameras vorgesehen, die seitlich links und rechts des Rohrstrangs angeordnet sind und die eine Abbildung der linken Umfangslinie des Rohrstrangs beziehungsweise eine Abbildung der rechten Umfangslinie des Rohrstrangs erzeugen. Aus den Abbildungen wird mittels Bildverarbeitung laufend der Außendurchmesser des Rohrstrangs als Regelgröße der Regelung ermittelt. Als Stellgröße der Regelung dient der radiale Abstand der wassergekühlten Grafitplatten zur Rohr-Längsachse, der mittels einer motorischen Formbackennachführung einstellbar ist.

Die Druckschriften US 2017/327403 A1 und JP 2007-001811 A beschreiben weitere Methoden zur Herstellung von Quarzglasrohren mit großem Durchmesser unter Einsatz eines Formwerkzeugs, wie beispielsweise Graphitplatten.

Technische Aufgabe

Infolge der Rotation des Hohlzylinders um seine Längsachse definieren die im Abstand dazu angeordneten Graphitplatten eine kreisrunde "Quasi-Öffnung", durch die hindurch das erweichte Quarzglas beim Umformprozess gezwängt wird. Die Graphitplatten führen zu Defekten, insbesondere spiralförmigen Streifen auf der Außenseite des abgezogenen Quarzglasrohres.

Infolge des Innen-Überdrucks Gasdrucks kann sich - in Zufuhrrichtung des Hohlzylinders zum Ofen gesehen - vor den Grafitplatten ein Umfangs-Wulst aus weichem Quarzglas aufbauen. Dessen Volumen unterliegt einem Erneuerungs-Mechanismus, bei dem beständig neues Glas aufgestaut und im gleichen Maß über den Rohrstrang abgezogen wird, da die Abzugsgeschwindigkeit des Rohrstrangs deutlich größer ist als die Vorschubgeschwindigkeit des Hohlzylinders. Dieses Geschwindigkeitsverhältnis bewirkt ein "Elongieren" des Hohlzylinders und geht zwangsläufig einher mit einer Reduktion der Glas-Querschnittsfläche des umgeformten Rohres gegenüber der des Ausgangs-Hohlzylinders.

Alle Versuche, mit der bekannten Methode Quarzglasrohre mit gleicher oder höherer Glas-Querschnittsfläche zu erzielen, sind bislang fehlgeschlagen. Dies kann darauf zurückgeführt werden, dass dafür eine Umkehrung des genannten Geschwindigkeitsverhältnisses erforderlich ist, also eine Abzugsgeschwindigkeit des Rohrstrangs, die kleiner ist als die Vorschubgeschwindigkeit des Hohlzylinders, was allgemein auch als "Stauchen" bezeichnet wird. Beim Stauchen funktioniert der oben erwähnte Erneuerungs-Mechanismus des Wulst-Volumens nicht mehr, da sich permanent mehr erweichtes Glasvolumen vor der "Quasi-Öffnung" aufstaut als abgezogen wird. Beim Umformen eines Hohlzylinders führt dieses "Schieben" des erweichten Glasvolumens gegen das Formwerkzeug. entweder dazu, dass das Formwerkzeug kurzzeitig geöffnet werden muss, oder der Wulst wird in unregelmäßigen Zeitabständen nach innen durchgedrückt, oder er bleibt am Formwerkzeug kleben. Im ersten Fall kommt es zu Schwankungen in Innen- und Außendurchmesser, im zweiten Fall zu Schwankungen des Innendurchmessers, und im dritten Fall zum Abbruch des Umformprozesses. In jedem Fall ergibt sich ein instabiler Prozess.

Bedingt durch ihre kurze Heizzone ist bei flammenbasierten Heizzonen ein Stauchen des Ausgangs-Hohlzylinders in einem kleinen Umfang möglich, jedoch - wie oben bereits erwähnt - nur bei kleinen Wandstärken des umzuformenden Ausgangs-Hohlzylinders von weniger als 10 mm.

Es besteht somit ein Bedarf nach großen und gleichzeitig dickwandigen Quarzglasrohren mit guter Oberflächenqualität.

Es ist somit Aufgabe der Erfindung, ein dementsprechendes Rohr aus Quarzglas bereitzustellen.

Außerdem ist es Aufgabe der Erfindung, ein Verfahren anzugeben, das es erlaubt, dickwandige Ausgangs-Hohlzylinder aus Quarzglas mit Wandstärken von mehr als 20 mm zu Rohren mit größerem Durchmesser, aber etwa gleicher oder größerer Glas-Querschnittsfläche umzuformen.

Allgemeine Beschreibung der Erfindung

Diese Aufgabe wird hinsichtlich des Verfahrens ausgehend von dem eingangs genannten Verfahren erfindungsgemäß dadurch gelöst, dass der Gasdruck als Stellgröße einer Durchmesser-Regelung und/oder einer Durchmesser-Steuerung für den Rohr-Außendurchmesser oder für einen mit dem Rohr-Außendurchmesser korrelierten geometrischen Parameter verwendet wird und dass in einer Druckaufbauphase der Gasdruck von einem niedrigeren Anfangswert auf einen höheren Endwert allmählich erhöht wird, und dass für das Verhältnis von $V_C$ und $V_T$ gilt: $V_T = V_C \pm 0{,}2 \cdot V_C$.

Der Ausgangs-Hohlzylinder - oder kurz: Hohlzylinder - besteht aus Quarzglas. Dieses kann aus natürlich vorkommenden Rohstoffen erschmolzen oder aus synthetisch erzeugtem $SiO_2$ erzeugt sein. Das Quarzglas ist undotiert oder es enthält einen Dotierstoff oder mehrere Dotierstoffe. Der Hohlzylinder ist dickwandig; das heißt, seine Wandstärke beträgt beispielsweise mehr als 20 mm, mehr als 40 mm, mehr als 60 mm oder mehr als 80 mm.

Beim Umformprozess ist der Ausgangs-Hohlzylinder im Wesentlichen so orientiert, dass seine Hohlzylinder-Längsachse vorzugsweise horizontal verläuft. Ergebnis des Umformverfahrens ist ein Rohrstrang, aus dem ein Quarzglasrohr oder mehrere Quarzglasrohre mit der gewünschten Länge abgeschnitten werden. Die Begriffe "Rohr" und "Rohrstrang" werden hier insoweit synonym verwendet. Das Quarzglasrohr hat einen größeren Außendurchmesser und einen größeren Innendurchmesser als der Ausgangs-Hohlzylinder. Sofern zwischen Innendurchmesser und Außendurchmesser nicht ausdrücklich unterschieden werden muss, wird im Folgenden für beide Abmessungen auch der Sammelbegriff "Durchmesser" oder "Radialgeometrie" verwendet. Die "Radialgeometrie" des Ausgangs-Hohlzylinders wird auch als "Startgeometrie" bezeichnet und die "Radialgeometrie" des Rohrstrangs als "Zielgeometrie".

Ziel des Umformprozesses ist ein Quarzglasrohr mit einer Glas-Querschnittsfläche, die etwa gleich groß oder sogar größer ist als die Glas-Querschnittsfläche des Ausgangs-Hohlzylinders. Als Glas-Querschnittsfläche wird die von Glas belegte Fläche in einem Schnitt senkrecht zur Rohr-Längsachse bezeichnet.

Die Zielgeometrie, insbesondere der Rohrstrang-Außendurchmesser, ist die Sollgröße einer Regelung beziehungsweise einer Steuerung. Die Regelung erfolgt rechnergesteuert anhand von Messwerten zur Sollgröße, die Steuerung kann auch mindestens teilweise durch Einstellungen aufgrund von abgelesenen Parameterwerten von Hand erfolgen. Es gibt auch Kombinationen von Regelung und Steuerung, beispielsweise bei einer Regelung mit Vorsteuerung. Sofern nicht ausdrücklich ausgeschlossen, stehen die Begriffe "Regelung" oder "regeln" im Folgenden als Sammelbegriffe auch für "Steuerung" beziehungsweise "steuern" und auch für Kombinationen dieser Maßnahmen.

Der erfindungsgemäße Umformprozess unterscheidet sich von der bisherigen Verfahrensweise in mindestens drei Aspekten.

(i) Auf den Einsatz eines Formwerkzeugs wird aus dem oben erläuterten Grund verzichtet. Denn das "Schieben" des erweichten Glasvolumens durch die "Quasi-Öffnung" des Formwerkzeugs würde zu einem instabilen Prozess führen, bei dem sich immer mehr erweichtes Glasvolumen vor dem Formwerkzeug aufstaut und zu Welligkeiten im Rohrstrang führt. Hierbei wird ein Schwanken der Querschnittsfläche beobachtet, das nicht durch die Berechnung aus Stauchrate (Verhältnis von Vorschubgeschwindigkeit zu Abzugsgeschwindigkeit) und Querschnitt des Ausgangs-Hohlzylinders bestimmt werden kann.

Durch den Wegfall des Formwerkzeugs ergeben sich zwar Vorteile: die Rohr-Oberfläche ist glatt und feuerblank. Eine chemische Kontamination des Glases durch den Werkstoff des Formwerkzeugs kann ausgeschlossen werden.

Um durch freies Formen die gewünschte Zielgeometrie zuverlässig und präzise herstellen zu können, bedarf es aber einer anderen Regelung für den Rohrstrang-Durchmesser. Beim erfindungsgemäßen Verfahren wird daher der Gasdruck als Stellgröße einer Durchmesser-Regelung und/oder einer Durchmesser-Steuerung für den Rohrstrang-Außendurchmesser oder für einen mit dem Rohr-Außendurchmesser korrelierten geometrischen Parameter unmittelbar oder mittelbar verwendet. Eine mittelbare Verwendung in diesem Sinne liegt beispielsweise vor, wenn die Stellgröße nicht der Gasdruck ist, sondern ein mit dem Gasdruck korrelierter Parameter, wie die Durchflussmenge eines Druckgases. Innen- und/oder Außendurchmesser des abgezogenen Rohrstrangs werden dabei gemessen oder abgelesen.

Mit dem Rohr-Außendurchmesser korrelierte geometrische Parameter sind beispielsweise der Innendurchmesser und die Wandstärke des Rohres. Der Rohr-Außendurchmesser ist optisch erfassbar. Der Innendurchmesser ergibt sich über die Querschnittsfläche und die Stauchrate (Verhältnis von Vorschubgeschwindigkeit zu Abzugsgeschwindigkeit). Voraussetzung dafür ist ein stabiler Prozess, bei dem es nicht zu Änderungen der Querschnittsfläche kommt.

Die Umformung des Hohlzylinders beruht auf dem Gasdruck oder auf der Zentrifugalkraft beim Rotieren (Schleudern) oder auf beiden Wirkungen. Den Anteil des Gasdrucks an der Tangentialspannung $\sigma T$ in der Rohrwand beschreibt die sogenannte Kesselformel:

$$\sigma T \ = \text{Druck*Radius/Wanddicke} \qquad\qquad (1),$$

mit:

Druck = Gasdruck
Radius = Rohrradius im Verformungsbereich
Wanddicke = Wandstärke im Verformungsbereich

Im "Verformungsbereich" ändern sich Wandstärke, Durchmesser und Temperatur (Viskosität) kontinuierlich. Beispielsweise nimmt der Durchmesser des erweichten Glasstrangs in Abhängigkeit vom Verformungswiderstand des Glases, der insbesondere von der Wanddicke und der Viskosität bestimmt wird, vom Hohlzylinder zum Rohr hin kontinuierlich zu. Im Längsschnitt zeigt der Verformungsbereich insgesamt Trichterform mit einem mehr oder weniger ausgeprägt S-förmigen Übergang zwischen Hohlzylinder und Rohr, der im Folgenden auch als "Schulter" bezeichnet wird. In der Praxis hat der Verformungsbereich typischerweise eine Länge von mehreren 100 Millimetern, zum Beispiel 200 bis 800 mm, häufig etwa 500 mm.

Die Tangentialspannung wiederum bewirkt die Einstellung des Rohrradius (r) im Verformungsbereich nach der Differenzialgleichung:

$$\text{dRadius/dt=Spannung*Radius/Viskosität} \qquad\qquad (2).$$

mit:

> dRadius/dt = Dehngeschwindigkeit
> Spannung = Tangentialspannung
> Radius = Rohrradius im Verformungsbereich
> Viskosität = Über die Wanddicke gemittelter Wert der örtlichen Viskosität

(ii) Zu jedem vorgegebenen Parametersatz (Radialgeometrie von Ausgangs-Hohlzylinder und Rohrstrang sowie Prozessparametern, wie Vorschub- und Abzugsgeschwindigkeiten, Gasdruck und Temperaturverteilung im Verformungsbereich) existiert nur eine stabile, stationäre Schulterform, die sich als Lösung der Differenzialgleichung (2) ergibt. Nur der dieser Berechnung zugrunde liegende Wert für den Gasdruck führt im Idealfall ausgehend von Startgeometrie und in Abhängigkeit von den Prozessparametern zu der Zielgeometrie.

Dieser Wert für den Gasdruck kann der Regelung beziehungsweise der Steuerung der Radialgeometrie des Rohrstrangs als nominaler Anfangswert zugrunde gelegt werden (sofern der Gasdruck als Stellgröße der Regelung/Steuerung mindestens hilfsweise verwendet wird). Es hat sich aber gezeigt - und dies ergibt sich auch aus der obigen Gleichung (2) - dass sich jede Druckänderung nicht nur an einer Stelle, sondern an allen Stellen des Verformungsbereichs auswirkt, und zwar je nach den aktuellen lokalen Gegebenheiten unterschiedlich stark. Deshalb führt jede Druckänderung zu Schwankungen in der Zielgeometrie, die aber erst viel später, also nach sehr langer Totzeit, sichtbar werden und die nicht mehr ausregelbar sind. Die Regelung kann dabei leicht in einen instabilen, oszillierenden Zustand geraten, der zu einem Rohrstrang mit Wellenstruktur führt.

Die lange Totzeit lässt sich herstellungsbedingt kaum verkürzen. Daher wird vorgeschlagen, auf abrupte Druckänderungen zu verzichten, wie sie beispielsweise zu Beginn eines Umformprozesses zwecks Einstellung des Gasdrucks auf seinen nominalen Anfangswert vorgenommen werden könnten. Stattdessen wird vorgeschlagen, den Gasdruck während einer Druckeinstellphase von einem niedrigeren Anfangswert auf einen höheren Endwert allmählich zu erhöhen. Allmählich bedeutet dabei, dass der Gasdruck stetig - in möglichst kleinen Schritten oder im Idealfall kontinuierlich - erhöht wird. Der Anfangswert ist ein Druckwert, der Null beträgt oder der deutlich unterhalb des Gasdruck-Endwerts liegt, und der Endwert ist ein Druckwert, der im Bereich des Stellwerts für die Regelung/Steuerung der Zielgeometrie liegt. Während der Druckaufbauphase findet der Umformprozess bereits statt, das heißt, es wird kontinuierlich Quarzglasmaterial des Ausgangs-Hohlzylinder in Quarzglasmaterial des Rohrstrangs umgeformt, obwohl dieser seine vorgegeben Radial- Geometrie noch nicht erreicht hat.

Für jedes Paar von Ausgangs- und Zielgeometrie existiert eine maximal mögliche Rampe, um nicht in einen instabilen, oszillierenden Zustand zu geraten. Diese kann mit der Differentialgleichung (2) kalkuliert werden. Diese maximal mögliche Rampe ist ein Idealwert. Höhere Druckerhöhungsrampen können zu einer Verschlechterung in Bezug auf die Konstanz des abgezogenen Außendurchmessers und/oder zu einem höheren Materialverlust führen. Andererseits sind niedrigere Druckerhöhungsrampen als der Idealwert in Bezug auf die Konstanz des Außendurchmessers unschädlich. Das Gegenteil ist der Fall; eine diesbezügliche Untergrenze konnte nicht festgestellt werden. Allerdings hat eine niedrigere Druckerhöhungsrampe eine lange Zeitspanne bis zur Einstellung des vorgegebenen Gasdruck-Endwerts und damit des Durchmesser-Sollwerts zur Folge, was mit Zeit- und Materialverlust einhergeht, da sich bis dahin die vorgegebene RadialGeometrie des Rohes nicht eingestellt hat und das bis dahin erzeugte Rohrmaterial nur Materialverlust darstellt. Daher gibt es ein ökonomisches Motiv, die Druckerhöhungsrampe so groß wie möglich einzustellen. Zwar nicht der Zeitverlust, aber der Materialverlust kann verringert werden, indem ein Ausgangs-Hohlzylinder eingesetzt wird, bei dem das vordere Ende aus Dummy-Material mit geringerer Qualität besteht.

(iii) Ein Ziel des Umformprozesses ist ein Rohr mit größerem Durchmesser als der Ausgangs-Hohlzylinder aber etwa gleicher oder größerer Glas-Querschnittsfläche. Dafür ist das Verhältnis von Abzugsgeschwindigkeit $V_T$ des Rohrstrangs und Vorschubgeschwindigkeit Vc des Ausgangs-Hohlzylinders so einzustellen, dass gilt: $V_T = Vc \pm 0{,}2 \cdot V_C$. Beim hier vorliegenden Umformprozess liegt demnach die Abzugsgeschwindigkeit $V_T$ im Bereich der Vorschubgeschwindigkeit Vc oder sie ist sogar kleiner als diese. Im Unterschied dazu ist beim Elongieren eines Ausgangszylinders zu einem Rohrstrang die Vorschubgeschwindigkeit zur Heizzone wesentlich niedriger als die Abzugsgeschwindigkeit des Rohrstrangs aus der Heizzone. Dadurch ergibt sich beim Elongieren eine gewisse Eigenstabiltät des Ziehprozesses, die die Einstellung und Regelung der Radialgeometrie des Rohrstrangs erleichtert. Allerdings unterscheiden sich beim Elongieren die Glas-Querschnittsflächen von Ausgangszylinder und Rohrstrang in der Regel wesentlich. Die dem Elongierprozess gegebene Eigenstabilität kann beim vorliegenden Umformprozess nicht eintreten. Diesen Nachteil kompensiert das erfindungsgemäße Verfahren anhand der oben erläuterten Maßnahmen (i) und (ii).

Auf diese Weise können aus dickwandigen Quarzglas-Hohlzylindern durch freies Formen erstmals Rohre mit Wandstärken von mehr als 20 mm erzeugt werden, deren Glas-Querschnittsfläche gleich oder größer ist als die des Ausgangs-Hohlzylinders.

Eine übliche Regelung auf die Zielgeometrie des Rohrstrangs würde ausgehend von dem niedrigen Gasdruck-Anfangswert eine möglichst schnelle Einstellung des Gasdruck-Endwerts bewirken, was allerdings aus dem vorher erläuterten Grund zu Prozessinstabilitäten und einem oszillierenden Zustand führen kann Die allmähliche Erhöhung des Gasdrucks in der Druckaufbauphase erfolgt daher bevorzugt unabhängig von der Durchmesser-Regelung beziehungsweise unabhängig von der Durchmesser-Steuerung.

Im einfachsten Fall wird der Gasdruck manuell in kleinen Stufen erhöht, bis der Soll-Gasdruck erreicht ist. Alternativ dazu wird der Gasdruck linear oder auf Basis einer nicht-linearen Funktion gesteuert erhöht, bis der Soll-Gasdruck erreicht ist. Unabhängig von einer regulären Durchmesser-Regelung erfolgt die allmähliche Erhöhung des Gasdrucks in der Druckaufbauphase allerdings vorzugsweise ebenfalls durch eine Regelung.

Der regulären Durchmesser-Regelung beziehungsweise -Steuerung wird ein Durchmesser-Sollwert für den Rohr-Außendurchmesser und/oder für den Rohr-Innendurchmesser zugewiesen, wobei dem Durchmesser-Sollwert ein Soll-Gasdruck zugeordnet ist. Dabei ist es vorteilhaft, wenn der niedrigere Anfangswert im Bereich von 0 bis 50% des Soll-Gasdrucks, vorzugsweise im Bereich von 10 bis 30% des Soll-Gasdrucks, und der höhere Endwert im Bereich von 70 bis 110% des Soll-Gasdrucks, vorzugsweise im Bereich von 90 bis 100% des Soll-Gasdrucks liegen.

Die Druckaufbauphase ist dem eigentlichen Umformprozess vorgeschaltet. Zu Beginn der Druckaufbauphase hat der Hohlzylinder die Erweichungstemperatur erreicht und die Prozessparameter, wie die Temperatur der Heizzone, die Vorschubgeschwindigkeit und die Abzugsgeschwindigkeit, sind so eingestellt, wie sie im eigentlichen Umformprozess zu erwarten sind. Während der Druckaufbauphase wird der Gasdruck in der Hohlzylinder-Innenbohrung (und damit auch in der Rohrstrang-Innenbohrung) beginnend mit dem niedrigeren Anfangs-Druckwert langsam auf den Endwert erhöht. Erst wenn der Soll-Gasdruck erreicht ist, wird ein Rohrstrang mit der Zielgeometrie erzeugt. Das bis dahin umgeformte Rohrstrang-Material ist Verlust. Der Materialverlust kann vermindert werden, wenn das Anfangsstück des Ausgangs-Hohlzylinders aus minderwertigem Quarzglas besteht. Unabhängig davon sollte die Druckaufbauphase so kurz wie möglich und nur so lang wie nötig sein, um einerseits den Materialverlust gering zu halten und andererseits durch eine flache Druckerhöhungsrampe einen stabilen Zustand des Umformprozesses zu erreichen. Um trotz flacher Druckerhöhungsrampe die Druckaufbauphase möglichst kurz zu halten, ist ein gewisser Anfangswert des Gasdrucks oberhalb von Null bis etwa 50% des Soll-Gasdrucks, vorzugsweise bis maximal 30% des Soll-Gasdrucks vorteilhaft.

Der Soll-Gasdruck liegt beispielsweise im Bereich von 2 bis 20 mbar, vorzugsweise im Bereich von 3 bis 15 mbar, und besonders bevorzugt im Bereich von 4 bis 10 mbar. Ein besonders hoher Gasdruck von mehr als 20 mbar kann die Prozessstabilität beeinträchtigen.

Andererseits ist es nicht unbedingt erforderlich, dass die Druckerhöhung in der Druckaufbauphase exakt zum Soll-Gasdruck führt. Denn die reguläre Durchmesser-Regelung beziehungsweise -Steuerung kann die Druckeinstellung übernehmen, wenn mindestens 70%, vorzugsweise mindestens 90% des Soll-Gasdrucks erreicht sind, oder auch wenn der Druck bereits geringfügig größer als der Soll-Gasdruck ist.

Es ist abzuwägen zwischen einer möglichst kurzen Druckaufbauphase und damit einem möglichst geringen Materialverlust einerseits und einer möglichst flachen Druckerhöhungsrampe und damit einer exakten Einstellung der Zielgeometrie mit wenig Durchmesserschwankungen andererseits. Als besonders geeigneter Kompromiss hat es sich erwiesen, wenn die Druckaufbauphase eine Dauer zwischen 1 und 120 Minuten, vorzugsweise eine Dauer zwischen 5 und 100 Minuten, besonders bevorzugt eine Dauer zwischen 10 und 80 Minuten, und insbesondere eine Dauer zwischen 15 und 60 Minuten hat.

Aus diesen Erwägungen heraus ergibt sich auch der zeitliche Verlauf der Druckerhöhung in der Druckaufbauphase. Die Druckerhöhung kann beispielsweise mit konstanter Steigung (linear) erfolgen oder sie kann einen nicht-linearen Verlauf mit am Ende abnehmender oder zunehmender Steigung haben. Es hat sich als günstig erwiesen, wenn der Gasdruck in der Druckaufbauphase mindestens zeitweise mit einer zeitlichen Rampe $\Delta p$ erhöht wird, für die gilt:

0,01 mbar/min < $\Delta p$ < 0,8 mbar/min, vorzugsweise: $\Delta p$ < 0,5 mbar/min und insbesondere $\Delta p$ < 0,2 mbar/min.

Unabhängig vom zeitlichen Verlauf der Druckerhöhung in der Druckaufbauphase kann der Druckerhöhungs-Rampe auch ein Mittelwert über die gesamte Druckaufbauphase zugeordnet werden. Dabei wird der Gasdruck während der gesamten Druckaufbauphase bevorzugt mit einer mittleren zeitlichen Rampe $\Delta p_m$ erhöht, für die gilt:

0,01 mbar/min < $\Delta p_m$ < 0,5 mbar/min, vorzugsweise: $\Delta p_m$ < 0,1 mbar/min

und insbesondere $\Delta p_m < 0{,}06$ mbar/min.

Das Umformverfahren ist besonders geeignet für die industrielle Herstellung großvolumiger und dickwandiger Quarzglas-Rohre. Im Hinblick darauf haben der Hohlzylinder (cylinder; C) und der Rohrstrang (tube; T) vorzugsweise folgende Radialgeometrie:

$$150 \text{ mm} \quad < \text{ } C_a \quad\quad < \quad 300 \text{ mm,}$$

$$30 \text{ mm} \quad < \text{ } C_i \quad\quad < \quad 180 \text{ mm,}$$

$$40 \text{ mm} \quad < (C_a - C_i)/2 \quad < \quad 100 \text{ mm}$$

$$300 \text{ mm} \quad < T_a \quad\quad < \quad 500 \text{ mm,}$$

$$250 \text{ mm} \quad < T_i \quad\quad < \quad 450 \text{ mm,}$$

$$20 \text{ mm} \quad < (T_a - T_i)/2 \quad < \quad 60 \text{ mm.}$$

Der Umformprozess führt zu einem Quarzglasrohr mit größerem Außendurchmesser und größerem Innendurchmesser als beim Ausgangs-Hohlzylinder. Für den Hohlzylinder und für den Rohrstrang ergeben sich dabei vorzugsweise folgende Beziehungen miteinander:

$$4 \cdot C_i \quad\quad < T_i \quad\quad < 8 \cdot C_i,$$

$$C_a + 100 \text{ mm} < T_a \quad\quad < C_a + 300 \text{ mm.}$$

Besonders bevorzugt liegt der Rohr-Außendurchmesser $T_a$ im Bereich des 1,5-fachen bis 2,2-fachen des Hohlzylinder-Außendurchmessers $C_a$.

Der Umformprozess ist außerdem besonders geeignet zur Herstellung von Quarzglas-Rohren mit großem Durchmesser und etwa gleicher oder größerer Glas-Querschnittsfläche wie der Ausgangs-Hohlzylinder. Zwischen der Glasquerschnittsfläche $A_C$ des Ausgangs-Hohlzylinders und der Glasquerschnittsfläche $A_T$ des Rohrstrangs gibt es dabei vorteilhafterweise folgenden Zusammenhang:

$A_T = A_C \pm 0{,}15 \cdot A_C$, vorzugsweise: $0{,}90 \cdot A_C \leq A_T \leq 1{,}15 \cdot A_C$,
insbesondere: $A_C \leq A_T \leq 1{,}10 \cdot A_C$.

Dabei liegen die Glasquerschnittsflächen $A_C$ und $A_T$ vorzugsweise im Bereich von 250 bis 1000 cm$^2$.

Beim Elongieren eines Ausgangszylinders zu einem Rohstrang ist dessen Vorschubgeschwindigkeit zur Heizzone wesentlich niedriger als die Abzugsgeschwindigkeit des Rohrstrangs aus der Heizzone. Dadurch ergibt sich beim Elongieren eine gewisse Eigenstabilität des Ziehprozesses, die die Einstellung und Regelung der Radialgeometrie des Rohrstrangs erleichtert. Allerdings unterscheiden sich die Glas-Querschnittsflächen von Ausgangszylinder und Rohrstrang wesentlich. Im Unterschied dazu liegt beim hier vorliegenden Umformprozess die Abzugsgeschwindigkeit des Rohrstrangs im Bereich der Vorschubgeschwindigkeit oder sie ist sogar kleiner als diese. Dadurch kann die in dem Elongierprozess gegebene Eigenstabilität nicht eintreten. Diesen Nachteil vermeidet das erfindungsgemäße Verfahren, wobei für das Verhältnis von $V_C$ und $V_T$ vorzugsweise gilt:

$$0{,}8 \cdot V_C \leq V_T \leq 1{,}05 \cdot V_C,$$

insbesondere:

$$0{,}9 \cdot V_C \leq V_T \leq 0{,}99 \cdot V_C.$$

Die Wanddicke des Rohrstrangs wird bestimmt durch das Verhältnis der Geschwindigkeiten Vc und $V_T$. Ist dieses Geschwindigkeitsverhältnis kleiner als 1, wird der Rohrstrang nicht elongiert, sondern es kommt zu einer Aufstauchung.

Es hat sich gezeigt, dass bei einem vergleichsweise geringen Durchsatz an Glasmasse Prozess-Instabilitäten einfacher zu vermeiden sind. Im Hinblick darauf hat es sich bewährt, wenn Vc so eingestellt wird, dass sich ein Durchsatz an Quarzglasmasse von mindestens 30 kg/h aber weniger als 60 kg/h und vorzugsweise weniger als 45 kg/h ergibt

Hinsichtlich des Rohres aus Quarzglas wird die oben genannte Aufgabe erfindungsgemäß dadurch gelöst, dass es eine durch werkzeugfreies Umformen im Schmelzfluss erzeugte, feuerpolierte Außenmantelfläche aufweist und dass für den Rohr-Außendurchmesser $T_a$, den Rohr-Innendurchmesser $T_i$ und die Rohr-Wanddicke gelten:

$$300 \text{ mm} \quad < T_a \quad < \quad 550 \text{ mm},$$

$$250 \text{ mm} \quad < T_i \quad < \quad 450 \text{ mm},$$

$$20 \text{ mm} \quad < (T_a\text{-}T_i)/2 \quad < \quad 60 \text{ mm}.$$

Das Quarzglasrohr hat einen großen Außendurchmesser und ist trotzdem dickwandig in dem Sinne, dass seine Wanddicke größer ist als 20 mm ist. Es hat eine ohne Einwirkung eines Formwerkzeugs, das heißt, feuerpolierte, im Schmelzfluss erzeugte Außenmantelfläche, die glatt und frei von Streifen ist. Es ist nach dem erfindungsgemäßen Verfahren herstellbar und wird vorzugsweise anhand dieses Verfahrens hergestellt. Vorzugsweise besteht das Rohr aus synthetisch erzeugtem Quarzglas.

Vorteilhafterweise gelten für den Rohr-Außendurchmesser $T_a$, den Rohr-Innendurchmesser $T_i$ und die Rohr-Wanddicke $(T_a\text{-}T_i)/2)$:

$$330 \text{ mm} \quad < T_a \quad < \quad 500 \text{ mm},$$

$$275 \text{ mm} \quad < T_i \quad < \quad 400 \text{ mm},$$

$$25 \text{ mm} \quad < (T_a\text{-}T_i)/2 \quad < \quad 50 \text{ mm}.$$

Ausführungsbeispiel

Nachfolgend wird die Erfindung anhand eines Ausführungsbeispiels und einer Zeichnung näher erläutert. Im Einzelnen zeigt

**Figur 1** eine Vorrichtung zum Umformen eines Hohlzylinders aus Quarzglas in ein Quarzglasrohr in einer Seitenansicht und in schematischer Darstellung,

**Figur 2** ein Foto eines Quarzglasrohr-Abschnitts beim Auslaufen aus einem Heizofen während einer Druckeinstellphase eines Umformprozesses gemäß einem ersten Vergleichsbeispiel,

**Figur 3** ein Diagramm mit Profilen von Außendurchmesser und Wanddicke des umgeformten Quarzglasrohr-Abschnitts von Figur 2,

**Figur 4** ein Diagramm mit dem zeitlichen Verlauf des Gasdrucks während der Startphase des Umformprozesses und danach beim ersten Vergleichsbeispiel,

**Figur 5** ein Foto eines Quarzglasrohr-Abschnitts beim Auslaufen aus einem Heizofen während eines Umformprozesses gemäß einem zweiten Vergleichsbeispiel,

**Figur 6** ein Foto eines Quarzglasrohr-Abschnitts beim Auslaufen aus einem Heizofen während eines Umformprozesses gemäß einem ersten Ausführungsbeispiel der Erfindung,

**Figur 7** ein Diagramm mit Profilen von Außendurchmesser und Wanddicke des umgeformten Quarzglasrohr-Abschnitts von Figur 6,

**Figur 8**  ein Diagramm mit dem zeitlichen Verlauf des Gasdrucks während der Startphase des Umformprozesses und danach beim ersten Ausführungsbeispiel,

**Figur 9**  ein Diagramm mit Profilen von Außendurchmesser und Wanddicke beim Referenzbeispiel, und

**Figur 10**  ein Diagramm mit dem zeitlichen Verlauf des Gasdrucks während des Umformprozesses beim Referenzbeispiel.

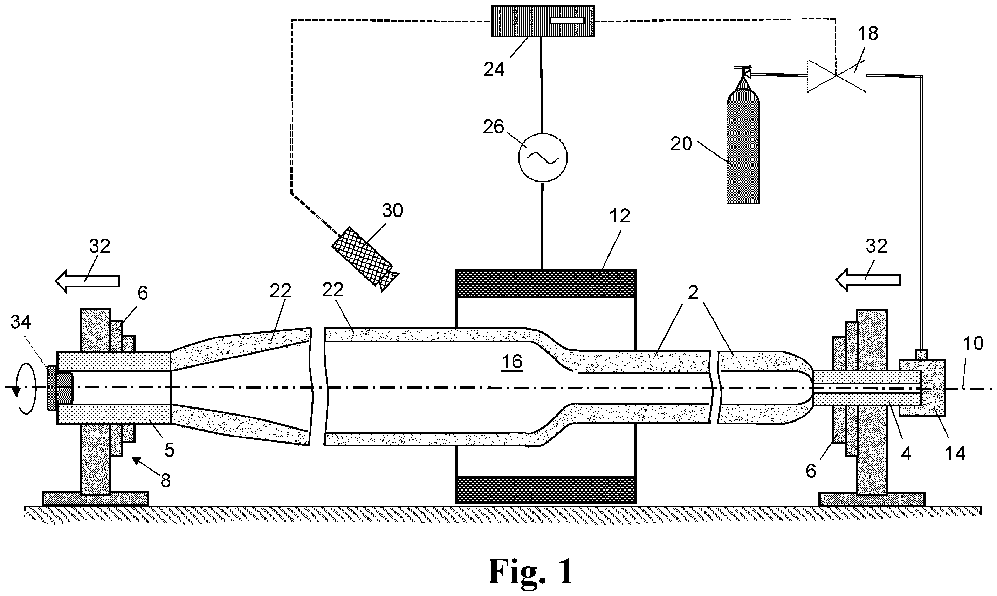

**Figur 1** zeigt schematisch eine Vorrichtung zum Umformen eines Quarzglas-Hohlzylinders 2 zu einem Rohr 22. Der Hohlzylinder 2 besteht aus synthetisch erzeugtem, undotiertem Quarzglas. Er wird nach dem sogenannten OVD-Verfahren (Outside Vapor Deposition) in einem Sootabscheideprozess hergestellt. Dabei wird eine flüssige oder gasförmige Ausgangssubstanz einer chemischen Reaktion (Hydrolyse oder Pyrolyse) unterzogen und aus der Gasphase als festes $SiO_2$ auf einem rotierenden Dorn abgeschieden. Die Ausgangssubstanz ist beispielsweise Siliziumtetrachlorid ($SiCl_4$) oder eine chlorfreie Siliziumverbindung. Als Zwischenprodukt wird ein poröser $SiO_2$-Sootkörper in Hohlzylinderform erhalten, dessen Innenbohrung durch den später entfernten Dorn ausgeformt worden ist. Durch Verglasen des Sootkörpers wird der Hohlzylinder 2 aus synthetischem Quarzglas erhalten.

An die Stirnseiten des umzuformenden Hohlzylinders 2 aus Quarzglas werden Halterohre 4, 5 angeschweißt, die in Spannfutter 6 einer horizontalen Glasdrehbank 8 eingespannt sind und die synchron um die Rotationsachse 10 rotieren. Das in Vorschubrichtung 32 vordere Halterohr 4 wird mittels eines Stopfens 34 verschlossen. In das andere Halterohr 5 kann ein Druckgas eingeleitet werden.

Der Hohlzylinder 2 wird mittels der Glasdrehbank 8 kontinuierlich und unter Rotation um seine Rotations- und Längsachse 10 mit einer vorgegebenen Zufuhrgeschwindigkeit in einen Widerstandsofen 12 geschoben, der den Hohlzylinder 2 ringförmig umgibt und der darin zonenweise auf eine Temperatur um 2100 °C aufgeheizt wird. Der Widerstandsofen ist über eine regelbare Stromquelle 26 mit einem Rechner 24 verbunden.

Durch einen Gaseinlass 14 kann in die Innenbohrung 16 von Hohlzylinder 2 und Rohr 22 ein Druckgas eingeleitet und ein definierter Gasdruck eingestellt werden. Der Gaseinlass 14 ist mit einem regelbaren Ventil 18 ist mit einem Druckgasbehälter 20 und mit dem Rechner 24 verbunden.

Getrieben durch die Zentrifugalkraft und den Gasdruck wird die niedrig-viskose Masse des Quarzglas-Hohlzylinders 2 auf den Soll-Durchmesser des Quarzglasrohres 22 aufgeblasen. Zur Messung des sich einstellenden Außendurchmessers und für eine Außendurchmesser-Regelung ist eine Mess- und Regeleinrichtung vorgesehen, die eine hochauflösende CCD-Kamera 30 umfasst, die auf den Rohrstrang 22 gerichtet ist. Die von der Kamera 30 erfassten Messdaten werden fortlaufend an den Rechner 24 übertragen, auf dem ein Bilddatenverarbeitungsprogramm installiert ist, mittels dem der aktuelle Außendurchmesser des Rohrstrangs 22 ermittelt wird. Dieser wird als Ist-Wert der Regelgröße (Rohrstrang-Außendurchmesser) in die Regelung eingespeist, deren Stellgröße der Gasdruck ist. Gasleitungen sind schematisch durch Doppellinien, Stromleitungen durch Einfachlinien und Datenleitungen durch gestrichelte Linien markiert.

Im Folgenden werden anhand Figur 1 Beispiele des Umformprozesses erläutert.

Vergleichsbeispiel 1

| | |
|---|---|
| $C_a$ | 220mm |
| | 43mm |
| Vorschub $V_C$ | 7,5 mm/min |
| Abzug $V_T$ | 7,4 mm/min |
| Formwerkzeug | Ohne |
| Durchsatz | 36kg/h |
| Ziel $T_a$ | 363mm |
| Ziel $T_i$ | 290mm |
| Ziel-Wanddicke | 36,5 mm |
| Heizleistung | ca. 740kW |
| Drehzahl | 10U/min |
| Glasfläche $A_C$ | 365 cm². |
| Glasfläche $A_T$ | 374 cm² |

In diesem Vergleichsbeispiel wurde der Ausgangs-Hohlzylinder 2 unter Rotation um seine Längsachse 10 in den Heizofen 12 eingefahren und der Längenabschnitt des Ausgangs-Hohlzylinders 2 im Heizofen 12 gleichmäßig aufgeheizt, Danach wurde der Gasdruck auf denjenigen Wert eingestellt, der zum Erreichen des vorgegebenen Rohrstrang-Außendurchmessers anhand der Gleichung (2) berechnet worden ist (Soll-Gasdruck). Der Soll-Gasdruck beträgt in dem Fall 5,3mbar. Gleichzeitig wurde der Vorschub auf 7,5 mm/min eingeschaltet und das freie Rohrstrang-Ende mit der vorgegebenen Abzugsgeschwindigkeit von 7,4 mm/min abgezogen.

Das führte nach einiger Zeit zu einer zu schnellen Zunahme des Rohrstrang-Außendurchmessers, so dass der Gasdruck auf 1 mbar abgesenkt werden musste, um zu verhindern, dass das Glas in Kontakt mit dem Heizrohr des Widerstandsofens 12 kommt. Dies führte nach einiger Zeit zu einer rapiden Verringerung des Rohrstrang-Außendurchmessers, so dass der Druck wieder auf 4 mbar erhöht werden musste. Es stellte sich jedoch kein stabiler Zustand ein und die Zielgeometriekonnte bis zum Ende des Umformprozesses nicht erreicht werden.

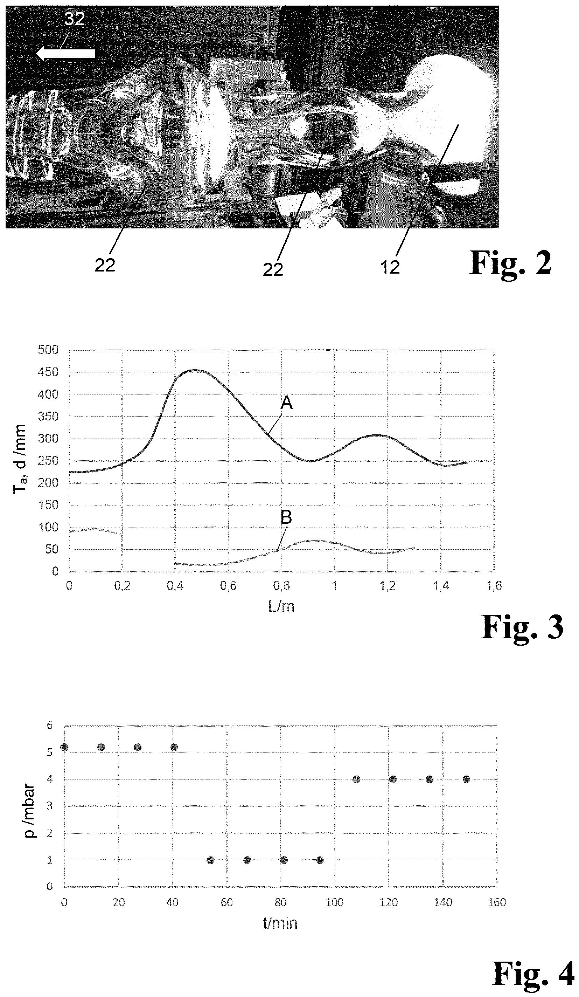

**Figur 2** zeigt ein Foto des aus dem Heizofen 12 auslaufenden Rohrstrangs 22. Die Unregelmäßigkeit des Außendurchmessers ist unmittelbar zu erkennen.

Das Diagramm von **Figur 3** zeigt die entsprechenden Verläufe von Außendurchmesser und Wanddicke. Auf der y-Achse sind der Durchmesser $T_a$ und die Wanddicke d in Millimeter aufgetragen und auf der x-Achse die Länge L des abgezogenen Rohrstrangs in Meter. Kurve A repräsentiert den Verlauf des Außendurchmessers und Kurve B den der Wanddicke (die infolge der starken Durchmesserschwankungen nicht durchgehend messbar war).

Das Diagramm von **Figur 4** zeigt den oben erläuterten zeitlichen Verlauf des Gasdrucks. Auf der y-Achse ist der Druck p in mbar aufgetragen und auf der x-Achse die Zeit t in Minuten.

Vergleichsbeispiel 2

| | |
|---|---|
| $C_a$ | 220mm |
| $C_i$ | 43mm |
| Vorschub $V_C$ | 7,5 mm/min |
| Abzug $V_T$ | 7,4 mm/min |
| Formwerkzeug | Kontakt bei 363mm Außendurchmesser |
| Durchsatz | 36kg/h |
| Ziel $T_a$ | 363mm |
| Ziel $T_i$ | 290mm |
| Ziel-Wanddicke | 36,5 mm |
| Leistung | ca. 740kW |
| Drehzahl | 10 U/min |
| Glasfläche $A_C$ | 365 cm$^2$ |
| Glasfläche $A_T$ | 374 cm$^2$ |

In diesem Vergleichsbeispiel wurde im Heizofen 12 ein Formwerkzeug eingebaut, das den Außendurchmesser des abgezogenen Rohrstrangs 22 vorgeben sollte. Der Ausgangs-Hohlzylinder 2 wurde unter Rotation um seine Längsachse 10 in den Heizofen 12 eingefahren und der Längenabschnitt des Ausgangs-Hohlzylinders 2 im Heizofen 12 gleichmäßig aufgeheizt. Der Vorschub wurde auf 7,5 mm/min eingeschaltet und das freie Rohrstrang-Ende mit der vorgegebenen Abzugsgeschwindigkeit von 7,4 mm/min abgezogen. Der Gasdruck wurde zunächst auf 4mbar fest eingestellt. Es wurde versucht, gegen das Formwerkzeug abzuformen, die auf einen Außendurchmesser von 363mm eingestellt waren. Beim ersten Kontakt mit dem Formwerkzeug begann das Quarzglas jedoch sich zu verdrillen. Anschließend wurde der Druck auf 2mbar gesenkt und danach mit einer flachen Rampe von 1mbar/h (ca. 0,017mbar/min) wieder hochgefahren. Trotz mehrerer Versuche, den Umformprozess zu stabilisieren wurde, das vorgegebene Zielmaß nicht erreicht und das Formwerkzeug musste letztendlich geöffnet werden, um die Quarzglasmasse zu befreien.

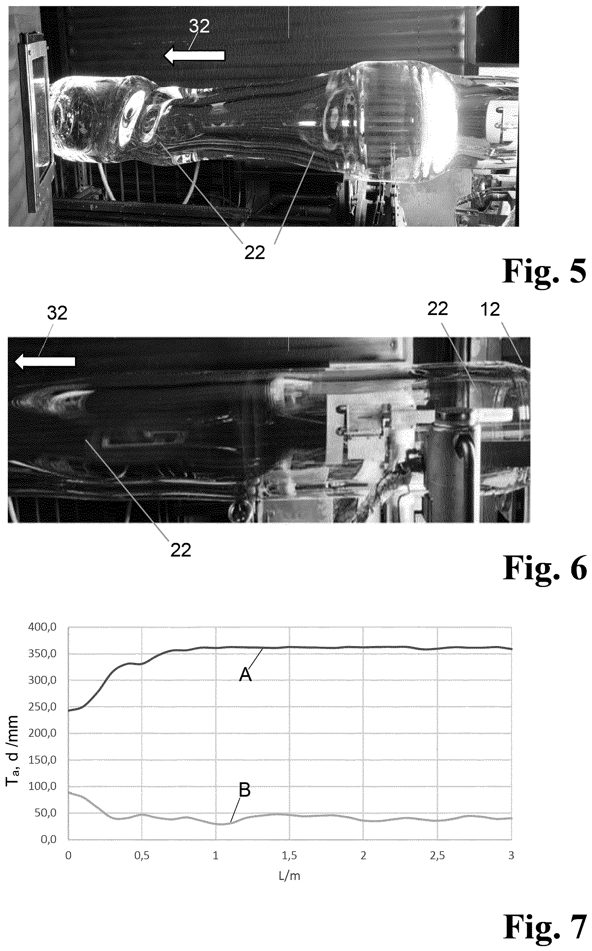

Das Foto von **Figur 5** zeigt die Verdrillungen und Unregelmäßigkeiten im Außendurchmesser des bis dahin abgezogenen Rohrstrangs.

Beispiel 1

| | |
|---|---|
| $C_a$ | 220mm |
| $C_i$ | 43mm |
| Vorschub $V_C$ | 7,5 mm/min |
| Abzug $V_T$ | 7,4 mm/min |
| Formwerkzeug | ohne |
| Durchsatz | 36kg/h |
| Ziel $T_a$ | 363mm |
| Ziel $T_i$ | 290mm |
| Ziel-Wanddicke | 36,5 mm |
| Leistung | ca. 740kW |
| Drehzahl | 10U/min |
| Glasfläche $A_C$ | 365 cm$^2$ |
| Glasfläche $A_T$ | 374 cm$^2$ |

In Beispiel 1 wurde der Ausgangs-Hohlzylinder 2 unter Rotation um seine Längsachse 10 in den Heizofen 12 eingefahren und der anfängliche Gasdruck wurde auf 1mbar eingestellt und während des Aufheizens konstant gehalten. Nachdem der Längenabschnitt des Ausgangs-Hohlzylinders 2 im Heizofen 12 gleichmäßig aufgeheizt war, wurde der Vorschub auf 7,5 mm/min eingeschaltet und das freie Rohrstrang-Ende mit der vorgegebenen Abzugsgeschwindigkeit von 7,4 mm/min abgezogen. Gleichzeitig wurde der Anfangswert des Gasdrucks mit einer geregelten Rampe von 0,06mbar/min solange erhöht, bis der Gasdruck seinen Endwert von 5,3 mbar erreicht hatte. Dieser Endwert entspricht gleichzeitig genau dem anhand der Gleichung (2) berechneten Soll-Gasdruck. Die Druckaufbauphase war damit beendet und der Rohrstrang 22 nahm den gewünschten Außendurchmesser von 363 mm ein. Bis dahin - in der Druckaufbauphase - war die eigentliche Durchmesser-Regelung über den Rechner 24 nicht aktiviert. Anschließend wurde die Regelung für den Außendurchmesser eingeschaltet, um die Geometrie im gewünschten Bereich zu halten. Der Gasdruck diente dabei der Regelung als Stellgröße. Durch das Aufblasen des ursprünglichen kleineren Volumens der Hohlzylinder-Innenbohrung auf das größere Volumen der Rohr-Innenbohrung ist zur Aufrechterhaltung des Gasdrucks, der zum Rohr-Außendurchmesser Ziel-$T_a$ führt, eine fortlaufende Gaszufuhr erforderlich.

**Figur 6** zeigt ein Foto des aus dem Heizofen auslaufenden Rohrstrangs 22. Dieser hat einen im Wesentlichen konstanten Außendurchmesser und eine glatte Wandung mit störungsfreier Oberfläche.

Das Diagramm von **Figur 7** zeigt die entsprechenden Verläufe von Außendurchmesser und Wanddicke. Auf der y-Achse sind der Durchmesser $T_a$ und die Wanddicke d in Millimeter aufgetragen und auf der x-Achse die Länge L des abgezogenen Rohrstrangs in Meter. Kurve A repräsentiert den Verlauf des Außendurchmessers und Kurve B den der Wanddicke.

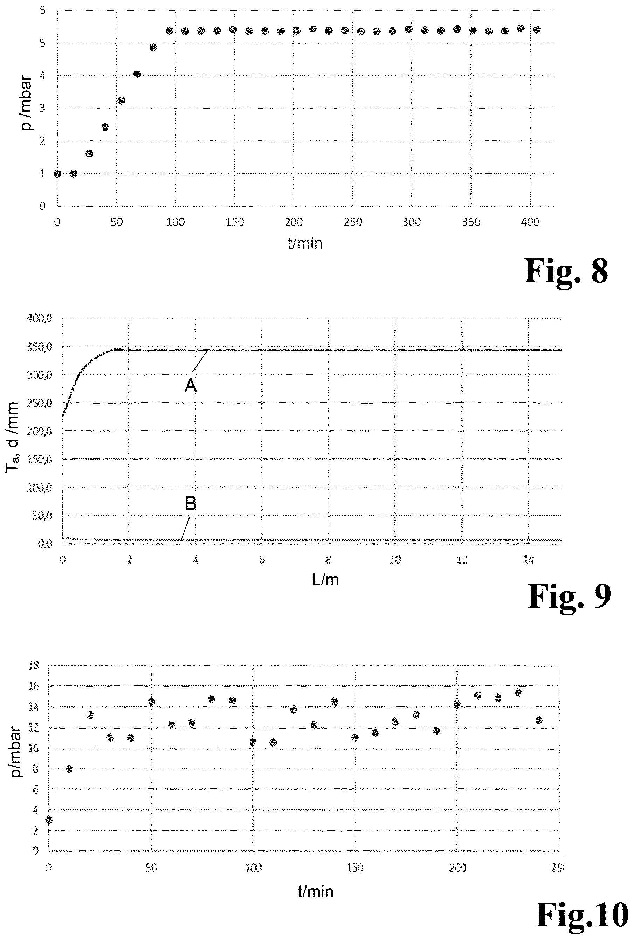

Das Diagramm von **Figur 8** zeigt den oben erläuterten zeitlichen Verlauf des Gasdrucks. Auf der y-Achse ist der Druck p in mbar aufgetragen gegen die Zeit t in Minuten. Die Druckaufbauphase ist durch die Zeitspanne a mit dem anfänglich konstanten Druckanfangswert von 1 mbar und die anschließende Zeitspanne b mit einer langsamen Erhöhung des Gasdrucks bis auf den Endwert von 5,3 mbar definiert. Während der Druckaufbauphase ist die Durchmesserregelung inaktiv.

Aus dem abgezogenen Rohrstrang 22 wurden dickwandige Rohre aus synthetischem Quarzglas mit großem mittlerem Außendurchmesser um 363 mm, einem großen mittleren Innendurchmesser von 290 mm und gleichzeitig mit einer großen mittleren Wanddicke um 36,5 mm abgelängt. Diese zeichnen sich durch im Schmelzfluss erzeugte, glatte und weitgehend defektfreie Außen- und Innenmantelflächen aus.

Referenzbeispiel

| | |
|---|---|
| $C_a$ | 220mm |
| $C_i$ | 45mm |
| Vorschub $V_C$ | 12 mm/min |
| Abzug $V_T$ | 66 mm/min |
| Formwerkzeug | auf 343mm eingestellt |
| Durchsatz | 60kg/h |
| Ziel $T_a$ | 343mm |
| Ziel $T_i$ | 330mm |

(fortgesetzt)

| Ziel-Wanddicke | 6,5 mm |
| --- | --- |
| Leistung | ca. 800kW |
| Drehzahl | 20U/min |
| Glasfläche $A_C$ | 364 cm$^2$ |
| Glasfläche $A_T$ | 69 cm$^2$ |

Das Referenzbeispiel entspricht dem Stand der Technik. Der dabei als Ausgangszylinder eingesetzte Hohlzylinder besteht aus nicht dotiertem Quarzglas, das aus natürlich vorkommenden Quarz-Rohstoffen nach der Verneuil-Methode erschmolzen worden ist. Dabei wird durch Aufschmelzen von kristallinem Quarzpulver unter Einsatz einer Knallgasflamme ein großer und langgestreckter Block erzeugt. Mittels einer mit Diamant-Abrasivpartikeln besetzten Kernbohrmaschine wird eine zentrale Bohrung erzeugt und die Innenwandung und Außenwandung abschließend mechanisch geglättet.

Bei diesem Umformprozess wird ein Formwerkzeug eingesetzt und der Rohrstrang wird unter Rotation um seine Längsachse aus der Heizzone und der erweichten Quarzglasmasse abgezogen (und nicht gestaucht). Nachdem der Längenabschnitt des Ausgangs-Hohlzylinders 2 im Heizofen 12 gleichmäßig aufgeheizt war, wurde der Vorschub auf 12 mm/min eingeschaltet und das freie Rohrstrang-Ende mit der vorgegebenen Abzugsgeschwindigkeit von 66 mm/min eingestellt. Gleichzeitig wurde der Gasdruck einer Rampe von 1 mbar/min sehr schnell erhöht und dabei von Hand geregelt. Das Glas wird mit dem Gasdruck gegen die Formbacken geblasen, welche auf einen Außendurchmesser von 343mm eingestellt sind.

Das Diagramm von **Figur 9** zeigt den zeitlichen Verlauf des Außendurchmessers und der Wanddicke (wie Figur 7). Es zeigt sich, dass infolge des Einsatzes des Formwerkzeugs der Außendurchmesser sehr konstant ist, und zwar trotz Schwankungen des Gasdrucks, wie aus **Figur 10** ersichtlich. Die Schwankungen des Gasdrucks wirken sich bei diesem Umformprozess auf den Außendurchmesser und auf die Wandstärke nicht nennenswert aus. Sie sind darauf zurückzuführen, dass nach Erreichen des Soll-Außendurchmessers der Gasdruck nur noch sehr grob manuell geregelt wird, um den Außendurchmesser im gewünschten Bereich zu halten.

## Patentansprüche

1. Verfahren zur Herstellung eines Rohres (22) aus Quarzglas durch Umformen eines Hohlzylinders (2), der eine Hohlzylinderbohrung (16), einen Außendurchmesser $C_a$, einen Innendurchmesser $C_i$ und eine Wandstärke aufweist, die mindestens 20 mm beträgt, indem dieser um eine Rotationsachse (10) rotierend kontinuierlich mit einer relativen Vorschubgeschwindigkeit Vc einer Heizzone (12) zugeführt, darin bereichsweise erweicht, und der erweichte Bereich unter der Wirkung eines in der Hohlzylinderbohrung (16) anliegenden Gasdrucks radial gedehnt und aus dem erweichten Bereich kontinuierlich ein Rohrstrang (22) mit einem Rohr-Außendurchmesser $T_a$, einem Rohr-Innendurchmesser $T_i$ und einer Rohr-Wanddicke geformt und mit einer Abzugsgeschwindigkeit $V_T$ abgezogen wird, **dadurch gekennzeichnet, dass** der Gasdruck als Stellgröße einer Durchmesser-Regelung (24) und/oder einer Durchmesser-Steuerung für den Rohr-Außendurchmesser oder für einen mit dem Rohr-Außendurchmesser korrelierten geometrischen Parameter verwendet wird und dass in einer Druckaufbauphase der Gasdruck von einem niedrigeren Anfangswert auf einen höheren Endwert allmählich erhöht wird, und dass für das Verhältnis von Vc und $V_T$ gilt: $V_T = V_C \pm 0{,}2 \cdot V_C$.

2. Verfahren nach Anspruch 1, **dadurch gekennzeichnet, dass** die allmähliche Erhöhung des Gasdrucks in der Druckaufbauphase unabhängig von der Durchmesser-Regelung (24) beziehungsweise unabhängig von der Durchmesser-Steuerung erfolgt.

3. Verfahren nach Anspruch 1 oder 2, **dadurch gekennzeichnet, dass** der Durchmesser-Regelung beziehungsweise -Steuerung ein Durchmesser-Sollwert für den Rohr-Außendurchmesser und/oder für den Rohr-Innendurchmesser zugewiesen wird, und dass dem Durchmesser-Sollwert ein Soll-Gasdruck zugeordnet ist, und dass der niedrigere Anfangswert im Bereich von 0 bis 50% des Soll-Gasdrucks, vorzugsweise im Bereich von 10 bis 30% des Soll-Gasdrucks, und der höhere Endwert im Bereich von 70 bis 110% des Soll-Gasdrucks, vorzugsweise im Bereich von 90 bis 100% des Soll-Gasdrucks liegen.

4. Verfahren nach Anspruch 3, **dadurch gekennzeichnet, dass** der Soll-Gasdruck im Bereich von 2 bis 20 mbar, vorzugsweise im Bereich von 3 bis 15 mbar, und besonders bevorzugt im Bereich von 4 bis 10 mbar, eingestellt wird.

**5.** Verfahren nach einem oder mehreren der vorhergehenden Ansprüche, **dadurch gekennzeichnet, dass** die Druckaufbauphase eine Dauer zwischen 1 und 120 Minuten, vorzugsweise eine Dauer zwischen 5 und 100 Minuten, besonders bevorzugt eine Dauer zwischen 10 und 80 Minuten, und insbesondere eine Dauer zwischen 15 und 60 Minuten hat.

**6.** Verfahren nach einem oder mehreren der vorhergehenden Ansprüche, **dadurch gekennzeichnet, dass** der Gasdruck in der Druckaufbauphase mindestens zeitweise mit einer zeitlichen Rampe $\Delta p$ erhöht wird, für die gilt:

$0{,}01$ mbar/min $< \Delta p < 0{,}8$ mbar/min, vorzugsweise: $\Delta p < 0{,}5$ mbar/min und
insbesondere $\Delta p < 0{,}2$ mbar/min.

**7.** Verfahren nach Anspruch 6, **dadurch gekennzeichnet, dass** der Gasdruck während der gesamten Druckaufbauphase mit einer mittleren zeitlichen Rampe $\Delta p_m$ erhöht wird, für die gilt:

$0{,}01$ mbar/min $< \Delta p_m < 0{,}5$ mbar/min, vorzugsweise: $\Delta p_m < 0{,}1$ mbar/min
und insbesondere $\Delta p_m < 0{,}06$ mbar/min.

**8.** Verfahren nach einem oder mehreren der vorhergehenden Ansprüche, **dadurch gekennzeichnet, dass** für den Hohlzylinder (2) und für den Rohrstrang (22) gelten:

$$150\,\text{mm} \quad < \quad C_a \quad < \quad 300\,\text{mm},$$

$$30\,\text{mm} \quad < \quad C_i \quad < \quad 180\,\text{mm},$$

$$40\,\text{mm} \quad < (C_a\text{-}C_i)/2 \quad < \quad 100\,\text{mm}$$

$$300\,\text{mm} \quad < \quad T_a \quad < \quad 550\,\text{mm},$$

$$250\,\text{mm} \quad < \quad T_i \quad < \quad 450\,\text{mm},$$

$$20\,\text{mm} \quad < (T_a\text{-}T_i)/2 \quad < \quad 60\,\text{mm}.$$

**9.** Verfahren nach einem oder mehreren der vorhergehenden Ansprüche, **dadurch gekennzeichnet, dass** für den Hohlzylinder (2) und für den Rohrstrang (22) gelten:

$$4{\cdot}C_i \quad\quad < \quad T_i \quad < 8{\cdot}C_i,$$

$$C_a + 100\,\text{mm} < T_a < C_a + 300\,\text{mm}.$$

**10.** Verfahren nach einem oder mehreren der vorhergehenden Ansprüche, **dadurch gekennzeichnet, dass** der Rohr-Außendurchmesser $T_a$ im Bereich des 1,5-fachen bis 2,2-fachen des Hohlzylinder-Außendurchmessers $C_a$ liegt.

**11.** Verfahren nach einem oder mehreren der vorhergehenden Ansprüche, **dadurch gekennzeichnet, dass** der Ausgangs-Hohlzylinder (2) eine Glasquerschnittsfläche Ac und der Rohrstrang (22) eine Glasquerschnittsfläche $A_T$ aufweisen, wobei gilt:

$A_T = Ac \pm 0{,}15{\cdot}A_C$, vorzugsweise: $0{,}90{\cdot}A_C \leq A_T \leq 1{,}15{\cdot}A_C$,
insbesondere: $A_C \leq A_T \leq 1{,}10{\cdot}A_C$.

**12.** Verfahren nach Anspruch 11, **dadurch gekennzeichnet, dass** die Glasquerschnittsflächen Ac und $A_T$ im Bereich von 250 bis 1000 cm$^2$ liegen.

**13.** Verfahren nach einem oder mehreren der vorhergehenden Ansprüche, **dadurch gekennzeichnet, dass** für das Verhältnis von Vc und $V_T$ gilt:

$0{,}8 \cdot V_C \leq V_T \leq 1{,}05 \cdot V_C$, insbesondere: $0{,}9 \cdot V_C \leq V_T \leq 0{,}99 \cdot V_C$.

14. Verfahren nach einem oder mehreren der vorhergehenden Ansprüche, **dadurch gekennzeichnet, dass** Vc so eingestellt wird, dass sich ein Durchsatz an Quarzglasmasse von mindestens 30 kg/h aber weniger als 60 kg/h und vorzugsweise weniger als 45 kg/h ergibt.

15. Rohr aus Quarzglas mit einem Rohr-Außendurchmesser $T_a$, einem Rohr-Innendurchmesser $T_i$, einer Rohr-Wanddicke, einer Außenmantelfläche und einer Innenmantelfläche, **dadurch gekennzeichnet, dass** es eine durch werkzeugfreies Umformen im Schmelzfluss erzeugte, feuerpolierte Außenmantelfläche aufweist und dass für den Rohr-Außendurchmesser $T_a$, den Rohr-Innendurchmesser $T_i$ und die Rohr-Wanddicke gelten:

$$300\ \text{mm} \quad < \quad T_a \quad < \quad 550\ \text{mm},$$

$$250\ \text{mm} \quad < \quad T_i \quad < \quad 450\ \text{mm},$$

$$20\ \text{mm} \quad < \quad (T_a - T_i)/2 \quad < \quad 60\ \text{mm}.$$

**Claims**

1. A method for manufacturing a tube (22) from quartz glass by forming a hollow cylinder (2) having a hollow cylinder bore (16), an outer diameter $C_a$, an inner diameter $C_i$, and a wall thickness which is at least 20 mm, by said hollow cylinder, continuously rotating about an axis of rotation (10), being fed at a relative feed rate $V_C$ to a heating zone (12), being softened therein in regions, and the softened region being radially expanded under the action of a gas pressure applied in the hollow cylinder bore (16), and a tube strand (22) having a tube outer diameter $T_a$, a tube inner diameter $T_i$, and a tube wall thickness being formed continuously from the softened region and being withdrawn at a withdrawal rate $V_T$, **characterized in that** the gas pressure is used as a manipulated variable of a diameter closed-loop control (24) and/or a diameter open-loop control for the tube outer diameter or for a geometrical parameter correlated with the tube outer diameter, **and in that,** in a pressure build-up phase, the gas pressure is gradually increased from a lower starting value to a higher final value, **and in that** the following applies to the ratio of $V_C$ and $V_T$: $V_T = V_C \pm 0.2 \cdot V_C$.

2. The method according to claim 1, **characterized in that** the gradual increase of the gas pressure in the pressure build-up phase occurs independently of the diameter closed-loop control (24) or independently of the diameter open-loop control.

3. The method according to claim 1 or 2, **characterized in that** the diameter closed-loop control or open-loop control is assigned a diameter target value for the tube outer diameter and/or for the tube inner diameter, **and in that** a target gas pressure is assigned to the diameter target value, **and in that** the lower starting value is in the range from 0 to 50% of the target gas pressure, preferably in the range from 10 to 30% of the target gas pressure, and the higher final value is in the range from 70 to 110% of the target gas pressure, preferably in the range from 90 to 100% of the target gas pressure.

4. The method according to claim 3, **characterized in that** the target gas pressure is set in the range of 2 to 20 mbar, preferably in the range of 3 to 15 mbar, and particularly preferably in the range of 4 to 10 mbar.

5. The method according to one or more of the preceding claims, **characterized in that** the pressure build-up phase has a duration between 1 and 120 minutes, preferably a duration between 5 and 100 minutes, particularly preferably a duration between 10 and 80 minutes, and in particular a duration between 15 and 60 minutes.

6. The method according to one or more of the preceding claims, **characterized in that** the gas pressure is increased in the pressure build-up phase at least temporarily with a time ramp $\Delta p$, for which the following applies: 0.01 mbar/min < $\Delta p$ < 0.8 mbar/min, preferably: $\Delta p$ < 0.5 mbar/min and in particular $\Delta p$ < 0.2 mbar/min.

7. The method according to claim 6, **characterized in that** the gas pressure is increased during the entire pressure build-up phase with an average ramp $\Delta p_m$ over time, for which the following applies:

0.01 mbar/min < $\Delta p_m$ < 0.5 mbar/min, preferably: $\Delta p_m$ < 0.1 mbar/min and in particular $\Delta p_m$ < 0.06 mbar/min.

8. The method according to one or more of the preceding claims, **characterized in that** the following applies for the hollow cylinder (2) and the tube strand (22):

$$150 \text{ mm} \quad < C_a \quad < 300 \text{ mm},$$

$$30 \text{ mm} \quad < C_i \quad < 180 \text{ mm},$$

$$40 \text{ mm} \quad < (C_a - C_i)/2 \quad < 100 \text{ mm}$$

$$300 \text{ mm} \quad < T_a \quad < 550 \text{ mm},$$

$$250 \text{ mm} \quad < T_i \quad < 450 \text{ mm},$$

$$20 \text{ mm} \quad < (T_a - T_i)/2 \quad < 60 \text{ mm}.$$

9. The method according to one or more of the preceding claims, **characterized in that** the following applies for the hollow cylinder (2) and the tube strand (22):

$$4 \cdot C_i \quad < T_i \quad < 8 \cdot C_i,$$

$$C_a + 100 \text{ mm} \quad < T_a \quad < C_a + 300 \text{ mm}.$$

10. The method according to one or more of the preceding claims, **characterized in that** the tube outer diameter $T_a$ is in the range of 1.5 to 2.2 times the hollow cylinder outer diameter $C_a$.

11. The method according to one or more of the preceding claims, **characterized in that** the starting hollow cylinder (2) has a glass cross-sectional area $A_C$ and the tube strand (22) has a glass cross-sectional area $A_T$, wherein the following applies:

$A_T = A_C \pm 0.15 \cdot A_C$, preferably: $0.90 \cdot A_C \leq A_T \leq 1.15 \cdot A_C$,
in particular: $A_C \leq A_T \leq 1.10 \cdot A_C$.

12. The method according to claim 11, **characterized in that** the glass cross-sectional areas $A_C$ and $A_T$ are in the range of 250 to 1000 cm$^2$.

13. The method according to one or more of the preceding claims, **characterized in that** the following applies for the ratio of $V_C$ and $V_T$: $0.8 \cdot V_C \leq V_T \leq 1.05 \cdot V_C$, in particular:

$$0.9 \cdot V_C \leq V_T \leq 0.99 \cdot V_C.$$

14. The method according to one or more of the preceding claims, **characterized in that** $V_C$ is set to result in a throughput of quartz glass mass of at least 30 kg/h but less than 60 kg/h and preferably less than 45 kg/h.

15. A quartz glass tube having a tube outer diameter $T_a$, a tube inner diameter $T_i$, a tube wall thickness, an outer lateral surface, and an inner lateral surface,
**characterized in that** it has a fire-polished outer lateral surface produced by tool-free forming in the melt flow, **and in that** the following apply for the tube outer diameter $T_a$, the tube inner diameter $T_i$, and the tube wall thickness:

$$300 \text{ mm} \quad < T_a \quad < 550 \text{ mm},$$

EP 4 067 315 B1

$$250 \text{ mm} < T_i < 450 \text{ mm},$$

$$20 \text{ mm} < (T_a - T_i)/2 < 60 \text{ mm}.$$

**Revendications**

1. Procédé de fabrication d'un tube (22) en verre de quartz par formage d'un cylindre creux (2) qui présente un alésage cylindrique creux (16), un diamètre extérieur $C_a$, un diamètre intérieur et une épaisseur de paroi qui est d'au moins 20 mm, en amenant en continu ledit cylindre creux à une zone de chauffage (12) en tournant autour d'un axe de rotation (10) à une vitesse d'avance relative $V_C$, zone de chauffage dans laquelle il se ramollit dans certaines zones, et la zone ramollie est étirée radialement sous l'effet d'une pression de gaz appliquée dans l'alésage cylindrique creux (16) et un tronçon de tube (22) comportant un diamètre extérieur de tube $T_a$, un diamètre intérieur de tube $T_i$ et une épaisseur de paroi de tube est formé en continu à partir de la zone ramollie et est retiré à une vitesse de retrait $V_T$, **caractérisé en ce que** la pression de gaz est utilisée comme grandeur de réglage d'une régulation de diamètre (24) et/ou d'une commande de diamètre pour le diamètre extérieur de tube ou pour un paramètre géométrique corrélé au diamètre extérieur de tube **et en ce que,** dans une phase de montée en pression, la pression de gaz est augmentée progressivement d'une valeur initiale plus faible à une valeur finale plus élevée, **et en ce que,** pour le rapport de $V_C$ à $V_T$, s'applique :

$$V_T = V_C \pm 0{,}2 \cdot V_C.$$

2. Procédé selon la revendication 1, **caractérisé en ce que** l'augmentation progressive de la pression de gaz dans la phase de montée en pression est effectuée indépendamment de la régulation de diamètre (24) ou indépendamment de la commande de diamètre.

3. Procédé selon la revendication 1 ou 2, **caractérisé en ce qu'une** valeur de consigne de diamètre pour le diamètre extérieur de tube et/ou pour le diamètre intérieur de tube est attribuée à la régulation de diamètre ou à la commande de diamètre, **et en ce qu'**une pression de gaz de consigne est associée à la valeur de consigne de diamètre, **et en ce que** la valeur initiale plus faible se situe dans la plage allant de 0 à 50 % de la pression de gaz de consigne, de préférence dans la plage allant de 10 à 30 % de la pression de gaz de consigne, et la valeur finale plus élevée se situe dans la plage allant de 70 à 110 % de la pression de gaz de consigne, de préférence dans la plage allant de 90 à 100 % de la pression de gaz de consigne.

4. Procédé selon la revendication 3, **caractérisé en ce que** la pression de gaz de consigne est réglée dans la plage allant de 2 à 20 mbar, de préférence dans la plage allant de 3 à 15 mbar, et de manière particulièrement préférée dans la plage allant de 4 à 10 mbar.

5. Procédé selon l'une ou plusieurs des revendications précédentes, **caractérisé en ce que** la phase de montée en pression présente une durée comprise entre 1 et 120 minutes, de préférence une durée comprise entre 5 et 100 minutes, de manière particulièrement préférée une durée comprise entre 10 et 80 minutes, et en particulier une durée comprise entre 15 et 60 minutes.

6. Procédé selon l'une ou plusieurs des revendications précédentes, **caractérisé en ce que** la pression de gaz est augmentée au moins temporairement dans la phase de montée en pression selon une rampe temporelle $\Delta p$ pour laquelle s'applique :
   $0{,}01 \text{ mbar/min} < \Delta p < 0{,}8 \text{ mbar/min}$, de préférence : $\Delta p < 0{,}5 \text{ mbar/min}$ et en particulier $\Delta p < 0{,}2 \text{ mbar/min}$.

7. Procédé selon la revendication 6, **caractérisé en ce que** la pression de gaz est augmentée pendant toute la phase de montée en pression selon une rampe temporelle moyenne $\Delta p_m$ pour laquelle s'applique :
   $0{,}01 \text{ mbar/min} < \Delta p_m < 0{,}5 \text{ mbar/min}$, de préférence : $\Delta p_m < 0{,}1 \text{ mbar/min}$ et en particulier $\Delta p_m < 0{,}06 \text{ mbar/min}$.

8. Procédé selon l'une ou plusieurs des revendications précédentes, **caractérisé en ce que,** pour le cylindre creux (2) et pour le tronçon de tube (22) s'appliquent :

16

$$150 \text{ mm} < C_a < 300 \text{ mm},$$

$$30 \text{ mm} < C_i < 180 \text{ mm},$$

$$40 \text{ mm} < (C_a - C_i) / 2 < 100 \text{ mm}$$

$$300 \text{ mm} < T_a < 550 \text{ mm},$$

$$250 \text{ mm} < T_i < 450 \text{ mm},$$

$$20 \text{ mm} < (T_a - T_i) / 2 < 60 \text{ mm}.$$

9. Procédé selon l'une ou plusieurs des revendications précédentes, **caractérisé en ce que,** pour le cylindre creux (2) et pour le tronçon de tube (22) s'appliquent :

$$4 \cdot C_i < T_i < 8 \cdot C_i,$$

$$C_a + 100 \text{ mm} < T_a < C_a + 300 \text{ mm}.$$

10. Procédé selon l'une ou plusieurs des revendications précédentes, **caractérisé en ce que** le diamètre extérieur de tube $T_a$ se situe dans la plage allant de 1,5 fois à 2,2 fois le diamètre extérieur de cylindre creux $C_a$.

11. Procédé selon l'une ou plusieurs des revendications précédentes, **caractérisé en ce que** le cylindre creux de sortie (2) présente une surface de section transversale de verre $A_C$ et le tronçon de tube (22) présente une surface de section transversale de verre $A_T$, dans lequel s'applique :
$A_T = A_C \pm 0,15 \cdot A_C$, de préférence : $0,90 \cdot A_C \le A_T \le 1,15 \cdot A_C$, en particulier :

$$A_C \le A_T \le 1,10 \cdot A_C.$$

12. Procédé selon la revendication 11, **caractérisé en ce que** les surfaces de sections transversales de verre $A_C$ et $A_T$ se situent dans la plage allant de 250 à 1000 cm$^2$.

13. Procédé selon l'une ou plusieurs des revendications précédentes, **caractérisé en ce que,** pour le rapport de $V_C$ à $V_T$ s'applique : $0,8 \cdot V_C \le V_T \le 1,05 \cdot V_C$, en particulier :

$$0,9 \cdot V_C \le V_T \le 0,99 \cdot V_C.$$

14. Procédé selon l'une ou plusieurs des revendications précédentes, **caractérisé en ce que** $V_C$ est réglé de sorte qu'un débit de masse de verre de quartz d'au moins 30 kg/h mais inférieur à 60 kg/h et de préférence inférieur à 45 kg/h est obtenu.

15. Tube en verre de quartz comportant un diamètre extérieur de tube $T_a$, un diamètre intérieur de tube $T_i$, une épaisseur de paroi de tube, une surface d'enveloppe extérieure et une surface d'enveloppe intérieure, **caractérisé en ce qu'**il présente une surface d'enveloppe extérieure polie au feu, créée par formage sans outil dans le flux de fusion, **et en ce que,** pour le diamètre extérieur de tube $T_a$, le diamètre intérieur de tube $T_i$ et l'épaisseur de paroi de tube s'appliquent :

$$300 \text{ mm} < T_a < 550 \text{ mm},$$

$$250 \text{ mm} < T_i < 450 \text{ mm},$$

$$20 \text{ mm} < (T_a - T_i) / 2) < 60 \text{ mm}.$$

**Fig. 1**

Fig. 2

Fig. 3

Fig. 4

**Fig. 5**

**Fig. 6**

**Fig. 7**

Fig. 8

Fig. 9

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2010111557 A
- US 2017327403 A1
- JP 2007001811 A